# EUROPEAN PATENT APPLICATION

(11) **EP 4 592 923 A1**
(43) Date of publication of application: **30.07.2025**
(21) Application number: 23954971.0
(22) Date of filing: 29.11.2023
(51) Int. Cl.: G06Q 10/083, B65G 1/137, G06K 19/077, B65G 1/04

(54) **PRODUCTION LINE MATERIAL DISTRIBUTION METHOD AND SYSTEM**

(30) Priority: 10.10.2023 CN 202311302399
(71) Applicant: Contemporary Amperex Technology (Hong Kong) Limited, Central (HK)
(72) Inventor: QIU, Shiping, Ningde, Fujian 352100 (CN)
(74) Representative: Kraus & Lederer PartGmbB
(86) International application number: PCT/CN2023/135177
(87) International publication number: WO 2025/076948

(57) **Abstract**

This disclosure discloses a delivery method for materials on a production line, applied to a delivery system for materials on a production line. The delivery system includes a logistics execution system, an enterprise resource planning system, a target automated guided vehicle, a production device corresponding to a process, and a material requisition computer. The method includes: sending, by the material requisition computer, a first material requisition request to the logistics execution system in a first material requisition case; sorting, by the logistics execution system in response to the first material requisition request, materials of battery packs based on a production quantity of the battery packs in a current production cycle, determining a first sorting result, and sending the first sorting result to the enterprise resource planning system, where the first sorting result includes material-related information required by different processes in a production line; and controlling, by the enterprise resource planning system based on the material-related information required by the different processes in the production line, the target automated guided vehicle to deliver a corresponding material to a production device for a corresponding process.

## Description

### CROSS-REFERENCE TO RELATED APPLICATIONS

This disclosure is provided based on Chinese Patent Application No. 202311302399.4, filed on October 10, 2023 and entitled "DELIVERY METHOD AND SYSTEM FOR MATERIALS ON PRODUCTION LINE" and claims priority to this Chinese Patent Application, which is incorporated herein by reference in its entirety.

### TECHNICAL FIELD

This disclosure relates to the field of battery pack production material delivery technologies, in particular to a delivery method and system for materials on a production line.

### BACKGROUND

The application of new energy batteries in life and industry is becoming increasingly widespread. For example, new energy vehicles equipped with batteries have been widely used, and batteries are also increasingly applied in the field of energy storage and the like.

Currently, delivery methods for materials on production lines involve delivering a complete set of materials on an entire line. Typically, the materials are delivered to a specified region, and then materials required by different processes are picked by operators and delivered to corresponding processes. Such delivery methods not only consume a lot of manpower but also are likely to cause human errors, severely affecting the production capacity of production lines.

### SUMMARY

This disclosure expects to provide a delivery method and system for materials on a production line.

Technical solutions of this disclosure are implemented as follows.

According to a first aspect, a delivery method for materials on a production line is provided and applied to a delivery system for materials on a production line. The delivery system includes a logistics execution system, an enterprise resource planning system, a target automated guided vehicle, a production device corresponding to a process, and a material requisition computer. The delivery method includes:
sending, by the material requisition computer, a first material requisition request to the logistics execution system in a first material requisition case;
sorting, by the logistics execution system in response to the first material requisition request, materials of battery packs based on a production quantity of the battery packs in a current production cycle, determining a first sorting result, and sending the first sorting result to the enterprise resource planning system, where the first sorting result includes material-related information required by different processes in the production line; and
controlling, by the enterprise resource planning system based on the material-related information required by the different processes in the production line, the target automated guided vehicle to deliver a corresponding material to a production device for a corresponding process.

According to the foregoing technical means, the logistics execution system sorts the materials of the battery packs based on the production quantity of the battery packs in the current production cycle and sends the first sorting result to the enterprise resource planning system; and the enterprise resource planning system controls, based on the material-related information required by the different processes in the production line in the first sorting result, the target automated guided vehicle to deliver the corresponding material to the production device for the corresponding process, thereby realizing automatic delivery of the material.

Further, the material-related information includes a delivery start time point, a material picking position, and a process position of the material.

The controlling, by the enterprise resource planning system based on the material-related information required by the different processes in the production line, the target automated guided vehicle to deliver a corresponding material to a production device for a corresponding process includes:
sending, by the enterprise resource planning system at a first delivery start time point, a material picking position of at least one material and a process position of the at least one material to the target automated guided vehicle;
moving the target automated guided vehicle to a corresponding material picking region based on the material picking position of the at least one material to pick a material; and
delivering, by the target automated guided vehicle in response to a delivery instruction and based on the process position of the at least one material, the at least one material to the production device for the corresponding process.

According to the foregoing technical means, the enterprise resource planning system sends, at the first delivery start time point, the material picking position of at least one material and the process position of the at least one material to the target automated guided vehicle; and the target automated guided vehicle moves to the corresponding material picking region to pick a material based on the material picking position of the at least one material, and delivers the at least one material to the production device for the corresponding process based on the process position of the at least one material, thereby realizing automatic delivery of the material.

Further, material picking positions of different materials are different, and process positions of different materials are the same or different.

According to the foregoing technical means, the material picking positions of different materials are different. To be specific, each material is picked at a specified position, allowing for a safer operating environment. Potential dangers, such as picking of wrong materials or unauthorized materials, can be identified and avoided more quickly by an operator.

Further, the material-related information further includes a volume of the material; and before the sending, by the enterprise resource planning system at a first delivery start time point, a material picking position of at least one material and a process position of the at least one material to the target automated guided vehicle, the delivery method further includes:
determining, by the enterprise resource planning system based on the volume of the at least one material, the target automated guided vehicle from at least one automated guided vehicle of a corresponding type.

According to the foregoing technical means, the enterprise resource planning system determines, based on the volume of the at least one material, a volume range of the at least one material, and then determines automated guided vehicles of corresponding types according to different volume ranges, to realize the most efficient delivery to a destination.

Further, the determining, by the enterprise resource planning system based on the volume of the at least one material, the target automated guided vehicle from at least one automated guided vehicle of a corresponding type includes:
determining, by the enterprise resource planning system, the target automated guided vehicle from at least one first automated guided vehicle in a case of determining that the volume of the at least one material falls within a first volume range and the at least one material does not include a battery cell; and
determining, by the enterprise resource planning system, the target automated guided vehicle from at least one second automated guided vehicle in a case of determining that the volume of the at least one material falls within the first volume range and the at least one material includes the battery cell; where
a first material rack with multiple layers of material boxes is arranged on the first automated guided vehicle.

According to the foregoing technical means, the volume of the at least one material falls within the first volume range, and a volume of the battery cell falls within the first volume range. Since the battery cell is delivered using a dedicated second automated guided vehicle, the target automated guided vehicle is determined from the at least one first automated guided vehicle in the case that the at least one material does not include the battery cell, and the target automated guided vehicle is determined from the at least one second automated guided vehicle in the case that the at least one material includes the battery cell, thereby ensuring efficient delivery of the material.

Further, a material falling within the first volume range includes at least one of the following: a fastener, a label, glue, a battery cell, a connecting member, a compact cooling system, a water cooling pipe, a lower box body, a copper busbar, an insulating member, an isolating member, and a roll material.

Further, the moving the target automated guided vehicle to a corresponding material picking region based on the material picking position of the at least one material to pick a material includes:
moving the target automated guided vehicle to a corresponding material picking region based on the material picking position of the at least one material; and
in a case that the at least one material does not include the battery cell, placing the at least one material on the first material rack with multiple layers of material boxes on the target automated guided vehicle, to implement material picking; and
in a case that the at least one material includes the battery cell, placing the battery cell on the target automated guided vehicle, to implement material picking.

According to the foregoing technical means, in the case that the at least one material does not include the battery cell, the at least one material is placed on the first material rack with multiple layers of material boxes on the target automated guided vehicle. To be specific, at least one material is delivered at a time, improving the delivery efficiency. In the case that the at least one material includes the battery cell, the battery cell is placed on the target automated guided vehicle, ensuring safe transportation of the battery cell.

Further, the determining, by the enterprise resource planning system based on the volume of the at least one material, the target automated guided vehicle from at least one available automated guided vehicle of a corresponding type includes:
determining, by the enterprise resource planning system, the target automated guided vehicle from at least one first automated guided vehicle in a case of determining that the volume of the at least one material falls within a second volume range, where
a maximum value of the first volume range is less than a minimum value of the second volume range, a single-layer second material rack is arranged on the first automated guided vehicle, and the first volume range and the second volume range are both allowable volume ranges for the material.

According to the foregoing technical means, the enterprise resource planning system determines the target automated guided vehicle from the at least one first automated guided vehicle in the case of determining that the volume of the at least one material falls within the second volume range, thereby ensuring safe and efficient delivery of the material.

Further, a material falling within the second volume range includes at least one of the following: an auxiliary control unit and a module.

Further, the moving the target automated guided vehicle to a corresponding material picking region based on the material picking position of the at least one material to pick a material includes:
moving the target automated guided vehicle to a corresponding material picking region based on the material picking position of the at least one material, and stacking the at least one material on the single-layer second material rack on the target automated guided vehicle according to an arrangement sequence of at least one process position, to implement material picking.

According to the foregoing technical means, a material required by at least one process position can be delivered at a time, improving the delivery efficiency.

Further, a third material rack with multiple layers of material boxes is arranged at a process site; an electronic label adhered to each layer of material box of the third material rack includes a first material code; and the delivery system further includes a manufacturing execution system and a personal digital assistant.

After the delivering, by the target automated guided vehicle in response to a delivery instruction and based on the process position of the at least one material, the at least one material to the production device for the corresponding process, the delivery method further includes:
scanning, by the personal digital assistant, a first material code of an electronic label on a target material box to obtain a first scanning result and sending the first scanning result to the manufacturing execution system, where the target material box is any one of the multiple layers of material boxes on the third material rack;
scanning, by the personal digital assistant, a second material code attached to a target material to obtain a second scanning result and sending the second scanning result to the manufacturing execution system, where the target material is any one of the at least one material;
after verifying that the first scanning result is consistent with the second scanning result, writing, by the manufacturing execution system, first information into the electronic label on the target material box, where the first information is used to indicate that the target material is placed in the target material box; and
displaying the first information through the electronic label on the target material box.

According to the foregoing technical means, the manufacturing execution system accurately places the target material in the target material box after verifying that the first scanning result is inconsistent with the second scanning result, thereby realizing error proofing.

Further, the delivery method further includes:
after verifying that the first scanning result is consistent with the second scanning result, writing, by the manufacturing execution system, the first information into an alarming apparatus; and
outputting the first information through the alarming apparatus.

According to the foregoing technical means, the alarming apparatus outputs the first information to notify the operator that the target material can be placed in the target material box, enhancing interaction between the operator and the system.

Further, the delivery method further includes:
after verifying that the first scanning result is inconsistent with the second scanning result, writing, by the manufacturing execution system, second information into the electronic label on the target material box, where the second information is used to indicate that the target material is not placed in the target material box; and
displaying the second information through the electronic label on the target material box.

According to the foregoing technical means, the manufacturing execution system cannot place the target material in the target material box after verifying that the first scanning result is inconsistent with the second scanning result, thereby realizing error proofing.

Further, the delivery method further includes:
after verifying that the first scanning result is inconsistent with the second scanning result, writing, by the manufacturing execution system, the second information into an alarming apparatus; and
outputting the second information through the alarming apparatus.

According to the foregoing technical means, the alarming apparatus outputs the second information to notify the operator that the target material cannot be placed in the target material box, enhancing interaction between the operator and the system.

Further, the delivery method further includes:
sending, by the logistics execution system, material-related information required by different processes in the production line to the manufacturing execution system;
generating, by the manufacturing execution system based on the material-related information required by the different processes in the production line, first material codes corresponding to the different processes; and
writing, by the manufacturing execution system, the first material codes corresponding to the different processes into electronic labels of the material boxes on the third material rack corresponding to the different processes.

According to the foregoing technical means, the manufacturing execution system writes the first material codes corresponding to the different processes into the electronic labels of the material boxes on the third material rack corresponding to the different processes, ensuring that the operator subsequently verifies the materials based on the electronic labels, thereby realizing error proofing.

Further, after the delivering, by the target automated guided vehicle in response to a delivery instruction and based on the process position of the at least one material, the at least one material to the production device for the corresponding process, the delivery method further includes:
returning the target automated guided vehicle to an automated guided vehicle temporary storage region in response to a return instruction.

According to the foregoing technical means, returning the target automated guided vehicle to the automated guided vehicle temporary storage region in response to the return instruction can significantly improve the logistics operation efficiency and shorten the manual intervention and wait time.

Further, after the delivering, by the target automated guided vehicle in response to a delivery instruction and based on the process position of the at least one material, the at least one material to the production device for the corresponding process, the delivery method further includes:
sending, by the production device corresponding to the process, a production completion instruction to the manufacturing execution system in a case of detecting the production completion instruction;
counting, by the manufacturing execution system in response to the production completion instruction, a material consumption quantity of each material in the process; and
sending, by the manufacturing execution system, a second material requisition request to the logistics execution system in a case of determining that the material consumption quantity of each material in the process is greater than a first threshold, where the second material requisition request is used to request delivery of materials required by a next production cycle.

According to the foregoing technical means, the manufacturing execution system sends the material requisition request to the logistics execution system in the case of determining that the material consumption quantity of each material in the process is greater than the first threshold, thereby realizing an automatic material requisition function.

Further, a fourth material rack with multiple layers of material boxes is arranged at the process site; an electronic label is adhered to each layer of material box of the fourth material rack; and the delivery method further includes:
sending, by the logistics execution system, material-related information of materials required by corresponding processes of the next production cycle to the manufacturing execution system; and
generating, by the manufacturing execution system based on the material-related information of the materials required by the corresponding processes of the next production cycle, third material codes, and writing the third material codes into the electronic labels of the material boxes on the fourth material rack at a corresponding process site.

According to the foregoing technical means, the manufacturing execution system writes the third material code into the electronic label of the material box on the fourth material rack at the corresponding process site, ensuring that the operator subsequently verifies the materials based on the electronic labels, thereby realizing error proofing.

Further, the delivery method further includes:
in a case that the materials required by the next production cycle are delivered to the production device for the corresponding process, placing the materials required by the corresponding processes of the next production cycle in the material boxes on the fourth material rack.

According to the foregoing technical means, when it is necessary to produce products for the next production cycle in the production line, the products produced in the next production cycle may be the same as or different from products produced in the current production cycle, and the materials required by the corresponding processes of the next production cycle are placed on the fourth material rack, thereby realizing quick changeover of the products on the production line.

Further, the delivery system further includes a controller.

After the delivering, by the target automated guided vehicle in response to a delivery instruction and based on the process position of the at least one material, the at least one material to the production device for the corresponding process, the delivery method further includes:
sending, by the production device corresponding to the process, first identification information of the process to the controller in a case of detecting that a production process is unqualified;
sending, by the controller, the first identification information of the process to the manufacturing execution system in a case of receiving a supplement instruction;
sending, by the manufacturing execution system, the first identification information of the process to the logistics execution system;
determining, by the logistics execution system based on the first identification information, to-be-supplemented materials required by all processes before the process, sorting the materials, and sending a second sorting result to the enterprise resource planning system; and
performing, by the enterprise resource planning system based on the second sorting result, material supplement for all processes before the process.

According to the foregoing technical means, in the case of detecting that the production process is unqualified, the production device corresponding to the process sends the first identification information of the process to the controller; in a case of receiving the supplement instruction, the controller sends the first identification information of the process to the logistics execution system through the manufacturing execution system; the logistics execution system determines the to-be-supplemented materials and sorts the materials based on the first identification information of the process; and then the enterprise resource planning system allocates a corresponding automated guided vehicle for material delivery, thereby realizing an automatic material supplement function.

Further, the delivery method further includes:
outputting, by the production device for the process, third information in a case of detecting an unqualified material, where the third information is used to indicate that the production process is unqualified.

According to a second aspect, a delivery system for materials on a production line is provided. The delivery system includes a logistics execution system, an enterprise resource planning system, a target automated guided vehicle, a production device corresponding to a process, and a material requisition computer; where the logistics execution system is connected to the enterprise resource planning system;
the material requisition computer is configured to send a first material requisition request to the logistics execution system in a first material requisition case;
the logistics execution system is configured to sort, in response to the first material requisition request, materials of battery packs based on a production quantity of the battery packs in a current production cycle, determine a first sorting result, and send the first sorting result to the enterprise resource planning system, where the first sorting result includes material-related information required by different processes in the production line; and
the enterprise resource planning system is configured to control, based on the material-related information required by the different processes in the production line, the target automated guided vehicle to deliver a corresponding material to a production device for a corresponding process.

This disclosure provides a delivery method and system for materials on a production line, where the logistics execution system sorts the materials of the battery packs based on the production quantity of the battery packs in the current production cycle and sends the first sorting result to the enterprise resource planning system; and the enterprise resource planning system controls, based on the material-related information required by the different processes in the production line in the first sorting result, the target automated guided vehicle to deliver the corresponding material to the production device for the corresponding process, thereby realizing automatic delivery of the material.

### BRIEF DESCRIPTION OF DRAWINGS

The accompanying drawings herein are incorporated into the specification and constitute a part of this specification. These accompanying drawings illustrate embodiments conforming to this disclosure, and are intended to explain the technical solutions of this disclosure together with the specification. Apparently, the accompanying drawings in the following description show merely some embodiments of this disclosure, and persons of ordinary skill in the art may still derive other drawings from these accompanying drawings without creative efforts.

The flowcharts shown in the accompanying drawings are merely illustrative descriptions, which do not necessarily include all contents and operations/steps and do not necessarily need to be performed in the order described. For example, some operations/steps may be split, while some operations/steps may be combined or partially combined, so the actual execution order may be changed according to the actual situation.
FIG. 1 is a first schematic flowchart of a delivery method for materials on a production line according to an embodiment of this disclosure;
FIG. 2 is a schematic diagram of a second automated guided vehicle according to an embodiment of this disclosure;
FIG. 3 is a schematic diagram of a first automated guided vehicle according to an embodiment of this disclosure;
FIG. 4 is a schematic diagram of a first material rack according to an embodiment of this disclosure;
FIG. 5 is a schematic diagram of a second material rack according to an embodiment of this disclosure;
FIG. 6 is a schematic diagram of a material falling within a second volume range, a second material rack, and a first automated guided vehicle according to an embodiment of this disclosure;
FIG. 7 is a second schematic flowchart of a delivery method for materials on a production line according to an embodiment of this disclosure;
FIG. 8 is a third schematic flowchart of a delivery method for materials on a production line according to an embodiment of this disclosure;
FIG. 9 is a schematic diagram of an alarming apparatus and a third material rack according to an embodiment of this disclosure;
FIG. 10 is a fourth schematic flowchart of a delivery method for materials on a production line according to an embodiment of this disclosure;
FIG. 11 is a fifth schematic flowchart of a delivery method for materials on a production line according to an embodiment of this disclosure; and
FIG. 12 is a schematic diagram of a constituent structure of a delivery system for materials on a production line according to an embodiment of this disclosure.

### Description of reference signs:

20. second automated guided vehicle; 30. first automated guided vehicle; 40. first material rack; 50. second material rack; 60. material falling within second volume range; 90. alarming apparatus; 901. operator; and 902. third material rack.

### DESCRIPTION OF EMBODIMENTS

In order to understand the features and technical content of the embodiments of this disclosure more detailedly, the implementation of the embodiments of this disclosure is described in detail below with reference to the accompanying drawings, and the accompanying drawings are for reference and illustration only and are not intended to limit the embodiments of this disclosure.

Unless otherwise defined, all technical and scientific terms used herein shall have the same meanings as commonly understood by persons skilled in the technical field to which this disclosure belongs. The terms used herein are merely intended to describe the embodiments rather than to limit this disclosure.

In the following description, reference made to "some embodiments," "this embodiment," "the embodiments", examples, and the like describe a subset of all possible embodiments, but it can be understood that "some embodiments" may be the same subset or different subsets of all possible embodiments, and may be combined with each other without conflict.

If a description like "first/second" appears in the application document, the following explanation is additionally provided. In the following description, the term "first/second/third" is merely used to distinguish between similar objects and do not represent a specific order of the objects. It can be understood that "first/second/third" can be interchanged in a specific order or sequence when permitted, so that the embodiments described herein can be implemented in an order other than that illustrated or described herein.

The term "and/or" in the embodiments is merely an associative relationship for describing associated objects, indicating that three relationships may be present. For example, A and/or B may indicate three cases: presence of only object A; presence of both object A and object B; and presence of only object B.

Currently, new energy batteries are more and more widely used in life and industry. New energy batteries have been widely used not only in energy storage power supply systems such as hydroelectric power plants, thermal power plants, wind power plants, and solar power plants, but also in many other fields including electric transportation tools such as electric bicycles, electric motorcycles, and electric vehicles, and aerospace. With continuous expansion of application fields of traction batteries, market demands for the traction batteries are also expanding.

In the embodiments of this disclosure, a battery may be a battery cell. The battery cell refers to a basic unit that can realize mutual conversion between chemical energy and electrical energy and can be used for manufacturing a battery module or battery pack to supply power to an electric apparatus. The battery cell may be a secondary battery. The secondary battery refers to a battery cell whose active material can be activated for reuse through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead storage battery, or the like. This is not limited in the embodiments of this disclosure.

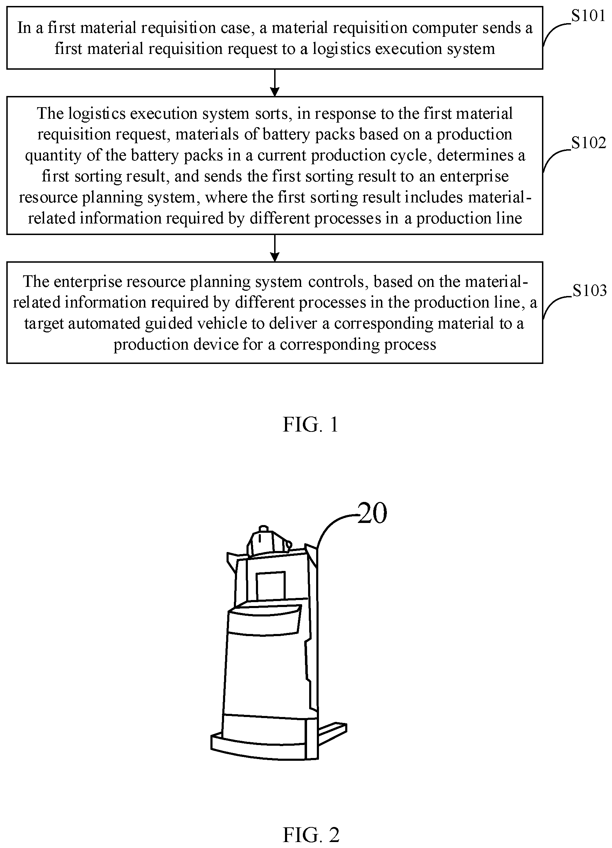

An embodiment of this disclosure provides a delivery method for materials on a production line. FIG. 1 is a first schematic flowchart of the delivery method for materials on a production line according to this embodiment of this disclosure, where the delivery method is applied to a delivery system for materials on a production line. The delivery system includes a logistics execution system (Logistics Execution System, LES), an enterprise resource planning system (Enterprise Resource Planning, ERP), a target automated guided vehicle (Automated Guided Vehicle, AGV), a production device corresponding to a process, and a material requisition computer. As shown in FIG. 1, the delivery method for logistics on a production line may specifically include the following steps.

S101. The material requisition computer sends a first material requisition request to the logistics execution system in a first material requisition case.

First material requisition means that material requisition is performed for the first time in a case that there is no material for producing battery packs at the production devices corresponding to the processes in the production line. The production line may be a battery pack production line, that is, a PACK production line.

In the first material requisition case, an operator sets a total production quantity of the battery packs with use of the material requisition computer, and the material requisition computer generates a first material requisition request based on the total production quantity of the battery packs and sends the first material requisition request to the logistics execution system.

The material requisition computer refers to a computer for material requisition.

S102. The logistics execution system sorts, in response to the first material requisition request, materials of battery packs based on a production quantity of the battery packs in a current production cycle, determines a first sorting result, and sends the first sorting result to the enterprise resource planning system, where the first sorting result includes material-related information required by different processes in the production line.

In this embodiment of this disclosure, the logistics execution system is configured to sort the materials of the battery packs.

The material-related information refers to information related to the materials.

The production quantity of the battery packs in the current production cycle may be preset in a material execution system, or set by the operator with use of the material requisition computer and then sent to the material execution system. The production cycle may be measured in hours or days.

S103. The enterprise resource planning system controls, based on the material-related information required by different processes in the production line, the target automated guided vehicle to deliver a corresponding material to a production device for a corresponding process.

In this embodiment of this disclosure, the enterprise resource planning system is configured to manage the automated guided vehicle.

In some embodiments, the material-related information includes a delivery start time point, a material picking position, and a process position of the material.

The delivery start time point can be understood as an operation start time point of the target automated guided vehicle.

The material picking position is a material preparation region.

In some embodiments, the step S103 that the enterprise resource planning system controls, based on the material-related information required by different processes in the production line, the target automated guided vehicle to deliver a corresponding material to a production device for a corresponding process includes the following step.
the enterprise resource planning system sends, at a first delivery start time point, a material picking position of at least one material and a process position of the at least one material to the target automated guided vehicle;
the target automated guided vehicle moves to a corresponding material picking region to pick a material based on the material picking position of the at least one material; and
the target automated guided vehicle delivers, in response to a delivery instruction and based on the process position of the at least one material, the at least one material to the production device for the corresponding process.

In this embodiment of this disclosure, delivery start time points of the at least one material are the same, which all start from the first delivery start time point.

In some embodiments, material picking positions of different materials are different, and process positions of different materials are the same or different.

In these embodiments of this disclosure, the material positions of different materials are different, meaning material preparation regions of different materials are different.

In these embodiments of this disclosure, the process positions of different materials are the same or different, meaning different materials may need to be delivered to a same process position or may need to be delivered to different process positions.

In some embodiments, the material-related information further includes a volume of the material; and before the sending, by the enterprise resource planning system at a first delivery start time point, a material picking position of at least one material and a process position of the at least one material to the target automated guided vehicle, the delivery method further includes the following step.

The enterprise resource planning system determines, based on the volume of the at least one material, the target automated guided vehicle from at least one available automated guided vehicle of a corresponding type.

Specifically, the enterprise resource planning system determines a volume range within which the volume of the at least one material falls, determines, based on the volume range, a type of an automated guided vehicle used to deliver the at least one material, and determines the target automated guided vehicle from at least one available automated guided vehicle of a corresponding type.

In some embodiments, the volume of the at least one material corresponding to the first delivery start time point falls within a same volume range.

In some embodiments, that the enterprise resource planning system determines, based on the volume of the at least one material, the target automated guided vehicle from at least one automated guided vehicle of a corresponding type includes:
the enterprise resource planning system determines the target automated guided vehicle from at least one first automated guided vehicle in a case of determining that the volume of the at least one material falls within a first volume range and the at least one material does not include a battery cell; and
the enterprise resource planning system determines the target automated guided vehicle from at least one second automated guided vehicle in a case of determining that the volume of the at least one material falls within the first volume range and the at least one material includes the battery cell; where
a first material rack with multiple layers of material boxes is arranged on the first automated guided vehicle.

In these embodiments of this disclosure, a volume of the battery cell falls within the first volume range. Typically, the battery cell is delivered using a dedicated second automated guided vehicle. Therefore, when the volume of the at least one material falls within the first volume range and the at least one material does not include the battery cell, the target automated guided vehicle for delivering the at least one material is determined from the at least one first automated guided vehicle; and when the volume of the at least one material falls within the first volume range and the at least one material includes the battery cell, the target automated guided vehicle for delivering the battery cell is determined from the at least one second automated guided vehicle.

FIG. 2 shows a second automated guided vehicle 20. The second automated guided vehicle 20 is configured to deliver a battery cell that falls within the first volume range. The second automated guided vehicle 20 is a 1.5T forklift-type automated guided vehicle.

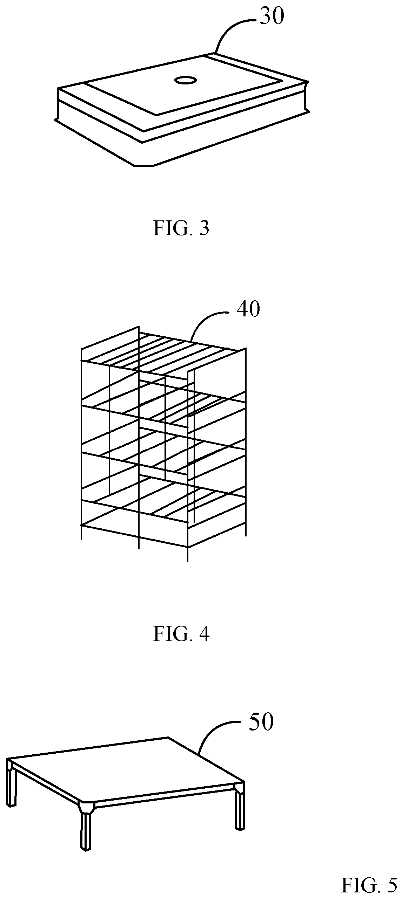

FIG. 3 shows a first automated guided vehicle 30. The first automated guided vehicle 30 is configured to deliver a material other than the battery cell and falling within the first volume range. The first automated guided vehicle 30 is a 2T large latent automated guided vehicle.

FIG. 4 shows a first material rack 40 with multiple layers of material boxes. The first material rack 40 is arranged on the first automated guided vehicle 30.

In some embodiments, a material falling within the first volume range includes at least one of the following: a fastener, a label, glue, a battery cell, a connecting member, a compact cooling system (Compact Cooling System, CCS), a water cooling pipe, a lower box body, a copper busbar, an insulating member, an isolating member, and a roll material.

The fastener may include a bolt and a nut. The connecting member may include a high-voltage connector, an injection-molded flange, an end plate, and an end plate bracket. The insulating member may include a sealing gasket, an insulation hood, an aerogel gasket, and a packaging material. The isolating member may include an explosion-proof valve and an upper cover. Materials for producing battery packs are not limited thereto.

In some embodiments, that the target automated guided vehicle moves to a corresponding material picking region to pick a material based on the material picking position of the at least one material includes:
the target automated guided vehicle moves to a corresponding material picking region based on the material picking position of the at least one material;
in a case that the at least one material does not include the battery cell, the at least one material is placed on the first material rack with multiple layers of material boxes on the target automated guided vehicle, to implement material picking; and
in a case that the at least one material includes the battery cell, the battery cell is placed on the target automated guided vehicle, to implement material picking.

In these embodiments of this disclosure, battery cells that fall within the first volume range are placed on the target automated guided vehicle determined from the at least one second automated guided vehicle, to implement material picking. The at least one material that falls within the first volume range but does not include the battery cell is placed on the first material rack with multiple layers of material boxes. The first material rack with multiple layers of material boxes is arranged on the target automated guided vehicle determined from the at least one first automated guided vehicle, to implement material picking.

Herein, it should be noted that after determining the material-related information required by the different processes in the production line, the logistics execution system generates a work order based on material name and material quantity in the material-related information and sends the work order to devices corresponding to material picking regions, so that a corresponding quantity of materials are placed on the target automated guided vehicle according to the work order by an operator.

In some embodiments, that the enterprise resource planning system determines, based on the volume of the at least one material, the target automated guided vehicle from at least one automated guided vehicle of a corresponding type includes:
the enterprise resource planning system determines the target automated guided vehicle from at least one first automated guided vehicle in a case of determining that the volume of the at least one material falls within a second volume range, where
a maximum value of the first volume range is less than a minimum value of the second volume range, a single-layer second material rack is arranged on the first automated guided vehicle, and the first volume range and the second volume range are both allowable volume ranges for the material.

In other words, in a case of determining that the volume of the at least one material falls within the second volume range, the enterprise resource planning system determines a type of the target automated guided vehicle corresponding to the second volume range and then determines the target automated guided vehicle for delivering the at least one material from at least one first automated guided vehicle of the corresponding type.

FIG. 5 shows a single-layer second material rack 50. The second material rack 50 is arranged on the first automated guided vehicle 30, and the first automated guided vehicle 30 is configured to deliver a material falling within the second volume range. The first automated guided vehicle 30 is a 2T large latent automated guided vehicle.

In some embodiments, the material falling within the second volume range includes at least one of the following: an auxiliary control unit (Service Box, S-BOX) and a module.

In some embodiments, that the target automated guided vehicle moves to a corresponding material picking region to pick a material based on the material picking position of the at least one material includes:
the target automated guided vehicle moves to a corresponding material picking region based on the material picking position of the at least one material, and the at least one material is stacked on the single-layer second material rack on the target automated guided vehicle according to an arrangement sequence of at least one process position, to implement material picking.

In these embodiments of this disclosure, the at least one material falling within the second volume range is stacked on the single-layer second material rack on the target automated guided vehicle according to the arrangement sequence of the at least one process position.

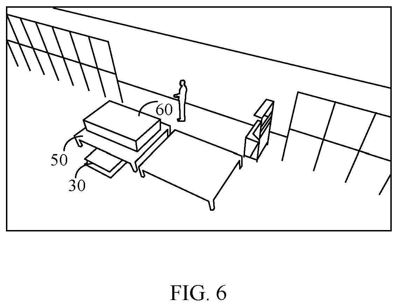

As shown in FIG. 6, the single-layer second material rack 50 is arranged on the first automated guided vehicle 30, and the operator places materials 60 falling within the second volume range on the second material rack 50.

In these embodiments of this disclosure, the logistics execution system sorts the materials of the battery packs based on the production quantity of the battery packs in the current production cycle and sends the first sorting result to the enterprise resource planning system; and the enterprise resource planning system controls, based on the material-related information required by the different processes in the production line in the first sorting result, the target automated guided vehicle to deliver the corresponding material to the production device for the corresponding process, thereby realizing automatic delivery of the material.

In these embodiments of this disclosure, a multi-layer third material rack is arranged at a process site; and an electronic label adhered to each layer of the third material rack includes a first material code.

In these embodiments of this disclosure, the delivery system further includes a manufacturing execution system (Manufacturing Execution System, MES) and a personal digital assistant (Personal Digital Assistant, PDA). The manufacturing execution system is a set of production information management system aimed at workshop execution layers of manufacturing enterprises. The manufacturing execution system can provide enterprises with management modules including manufacturing data management, planning and scheduling management, production dispatch management, inventory management, quality management, human resource management, work center/device management, tool and fixture management, procurement management, cost management, project Kanban management, production process control, bottom-layer data integration and analysis, top-layer data integration and decomposition, and the like, creating a solid, reliable, comprehensive, and feasible manufacturing collaboration management platform.

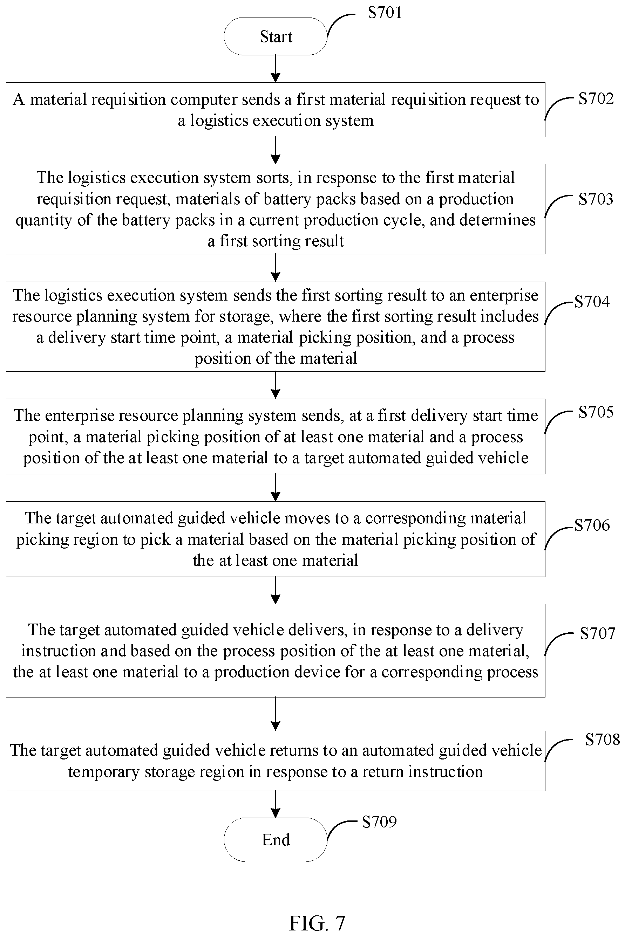

FIG. 7 is a second schematic flowchart of a delivery method for materials on a production line according to an embodiment of this disclosure. As shown in FIG. 7, the delivery method may include the following steps.

S701. Start.

S702. A material requisition computer sends a first material requisition request to a logistics execution system.

S703. The logistics execution system sorts, in response to the first material requisition request, materials of battery packs based on a production quantity of the battery packs in a current production cycle, and determines a first sorting result.

S704. The logistics execution system sends the first sorting result to an enterprise resource planning system for storage, where the first sorting result includes a delivery start time point, a material picking position, and a process position of the material.

S705. The enterprise resource planning system sends, at a first delivery start time point, a material picking position of at least one material and a process position of the at least one material to the target automated guided vehicle.

S706. The target automated guided vehicle moves to a corresponding material picking region to pick a material based on the material picking position of the at least one material.

S707. The target automated guided vehicle delivers, in response to a delivery instruction and based on the process position of the at least one material, the at least one material to the production device for the corresponding process.

S708. The target automated guided vehicle returns to an automated guided vehicle temporary storage region in response to a return instruction.

S709. End.

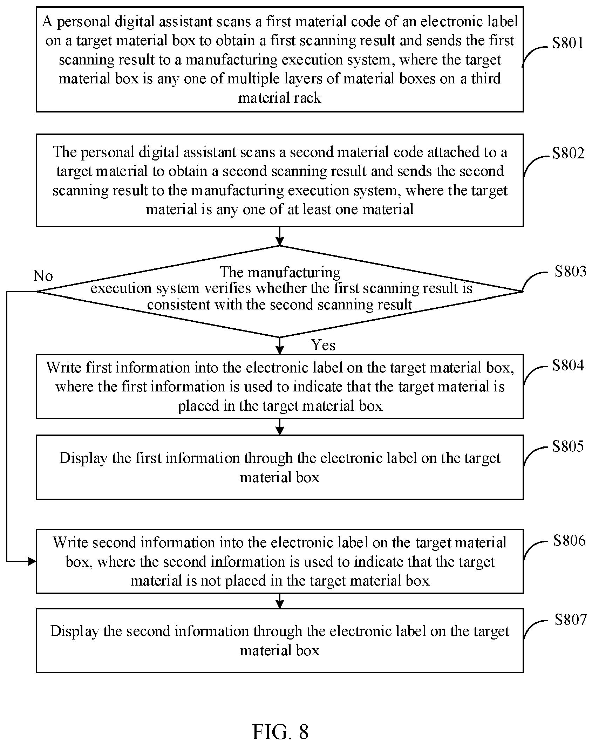

In this embodiment of this disclosure, after the delivering, by the target automated guided vehicle in response to a delivery instruction and based on the process position of the at least one material, the at least one material to the production device for the corresponding process, a delivery method for materials on a production line shown in FIG. 8 may further include the following steps.

S801. The personal digital assistant scans a first material code of an electronic label on a target material box to obtain a first scanning result and sends the first scanning result to the manufacturing execution system, where the target material box is any one of the multiple layers of material boxes on the third material rack.

S802. The personal digital assistant scans a second material code attached to a target material to obtain a second scanning result and sends the second scanning result to the manufacturing execution system, where the target material is any one of the at least one material.

In this embodiment of this disclosure, after the material is delivered to the production device for the corresponding process, the operator scans the first material code of the electronic label on the target material box with the personal digital assistant to obtain the first scanning result, and the personal digital assistant sends the first scanning result to the manufacturing execution system. The target material box is any one of the multiple layers of material boxes on the third material rack. In addition, the operator scans the second material code attached to the target material with the personal digital assistant to obtain the second scanning result, and the personal digital assistant sends the second scanning result to the manufacturing execution system. The target material is any material of the at least one material.

S803. The manufacturing execution system verifies whether the first scanning result is consistent with the second scanning result.

In this embodiment of this disclosure, if the first scanning result is consistent with the second scanning result, S804 is performed; otherwise, S806 is performed.

In this embodiment of this disclosure, the manufacturing execution system verifies whether the first scanning result is consistent with the second scanning result, to determine whether the target material can be placed in the target material box.

S804. Write first information into the electronic label on the target material box, where the first information is used to indicate that the target material is placed in the target material box.

S805. Display the first information through the electronic label on the target material box.

In this embodiment of this disclosure, in a case that the manufacturing execution system verifies that the first scanning result is consistent with the second scanning result, the manufacturing execution system writes the first information into the electronic label on the target material box, so that the first information is displayed through the electronic label on the target material box, and the operator determines, based on the first information, that the target material can be placed in the target material box.

S806. Write second information into the electronic label on the target material box, where the second information is used to indicate that the target material is not placed in the target material box.

S807. Display the second information through the electronic label on the target material box.

In this embodiment of this disclosure, in a case that the manufacturing execution system verifies that the first scanning result is inconsistent with the second scanning result, the manufacturing execution system writes the second information into the electronic label on the target material box, so that the second information is displayed through the electronic label on the target material box, and the operator determines, based on the second information, that the target material cannot be placed in the target material box.

The first information and the second information can be displayed in a text form on the electronic label, such as "OK" and "Not OK". Alternatively, the electronic label is provided with an indicator light, and distinguish can be realized through the color of the indicator light.

In some embodiments, an alarming apparatus is arranged at the process site. The delivery method further includes:
after verifying that the first scanning result is consistent with the second scanning result, the manufacturing execution system writes the first information into the alarming apparatus, where the first information is used to indicate that the target material is placed in the target material box;
the alarming apparatus outputs the first information;
after verifying that the first scanning result is inconsistent with the second scanning result, the manufacturing execution system writes the second information into the alarming apparatus, where the second information is used to indicate that the target material is not placed in the target material box; and
the alarming apparatus outputs the second information.

In these embodiments of this disclosure, in a case that the manufacturing execution system verifies that the first scanning result is consistent with the second scanning result, the manufacturing execution system inputs the first information to the alarming apparatus, the alarming apparatus outputs the first information, and the operator determines that the target material can be placed in the target material box by identifying the first information. In a case that the manufacturing execution system verifies that the first scanning result is inconsistent with the second scanning result, the manufacturing execution system inputs the second information to the alarming apparatus, the alarming apparatus outputs the second information, and the operator determines that the target material cannot be placed in the target material box by identifying the second information.

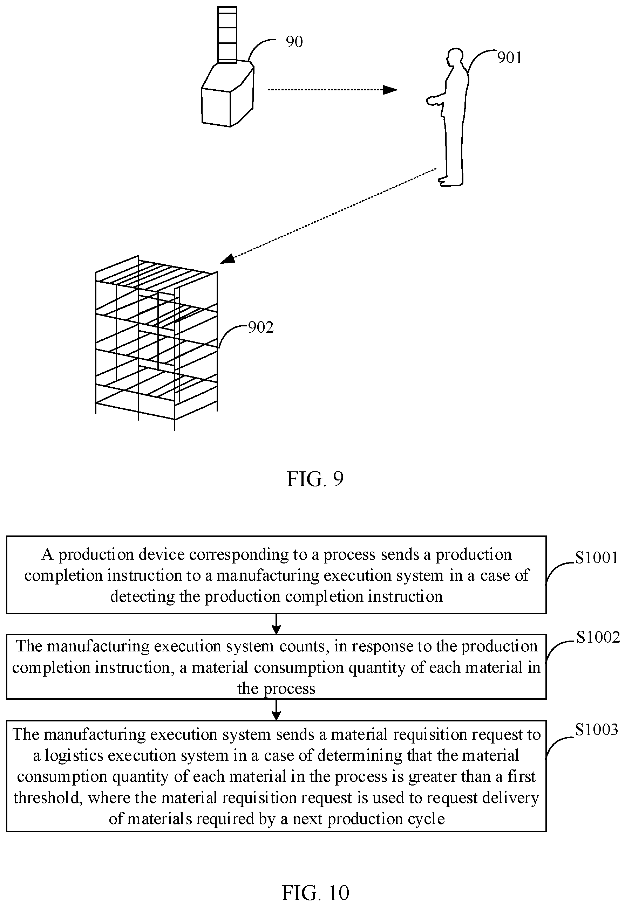

As shown in FIG. 9, in a case that an alarming apparatus 90 outputs first information, an operator 901 can place a target material in a target material box on a third material rack 902. In a case that the alarming apparatus 90 outputs second information, the operator 901 cannot place the target material in the target material box on the third material rack 902.

In some embodiments, the delivery method further includes:
the logistics execution system sends material-related information required by different processes in the production line to the manufacturing execution system;
the manufacturing execution system generates, based on the material-related information required by the different processes in the production line, first material codes corresponding to the different processes; and
the manufacturing execution system writes the first material codes corresponding to the different processes into electronic labels of the material boxes on the third material rack corresponding to the different processes.

The material-related information refers to information related to the materials. The material-related information includes at least material name and material quantity.

In these embodiments of this disclosure, the manufacturing execution system generates, based on the material name and material quantity of the materials required by the different processes in the production line, the first material codes corresponding to the different processes, and then writes the first material codes into the electronic labels of the material boxes on the third material rack corresponding to the different processes.

In some embodiments, after the delivering, by the target automated guided vehicle in response to a delivery instruction and based on the process position of the at least one material, the at least one material to the production device for the corresponding process, the delivery method further includes:
the target automated guided vehicle returns to an automated guided vehicle temporary storage region in response to a return instruction.

To be specific, the target automated guided vehicle returns to the automated guided vehicle temporary storage region in response to the return instruction and waits to be provided with a delivery task again.

In these embodiments of this disclosure, after verifying that the first scanning result is consistent with the second scanning result, the manufacturing execution system accurately places the target material in the target material box; and after verifying that the first scanning result is inconsistent with the second scanning result, the manufacturing execution system cannot place the target material in the target material box, thereby realizing error proofing.

In these embodiments of this disclosure, after the delivering, by the target automated guided vehicle in response to a delivery instruction and based on the process position of the at least one material, the at least one material to the production device for the corresponding process, a delivery method for materials on a production line shown in FIG. 10 may further include the following steps.

S1001. A production device corresponding to a process sends a production completion instruction to a manufacturing execution system in a case of detecting the production completion instruction.

The process can be construed as a step for producing a battery pack in a production line. During production of a battery pack, multiple processes are required, including mounting of modules, mounting of components of an electronic control system, wiring, mounting of a box cover, test, and the like. Each process has specific tasks and operating procedures to ensure that the quality and performance of the battery pack meet the requirements.

The production device corresponding to the process is configured to produce a product corresponding to the process.

After detecting that production of the product corresponding to the process is completed, the production device corresponding to the process generates a production completion instruction. Alternatively, after observing that the production device corresponding to the process completes the production of the product, the operator triggers a production completion button on the production device to generate the production completion instruction. The production completion instruction is used to indicate that the production device corresponding to the process completes the product corresponding to the process.

S1002. The manufacturing execution system counts, in response to the production completion instruction, a material consumption quantity of each material in the process.

In other words, after the production device corresponding to the process completes the product corresponding to the process, the manufacturing execution system MES records the material consumption quantity of each material in the process. For example, a 'plus one' operation is executed after each counting.

S1003. The manufacturing execution system sends a material requisition request to the logistics execution system in a case of determining that the material consumption quantity of each material in the process is greater than a first threshold, where the material requisition request is used to request delivery of materials required by a next production cycle.

Different materials correspond to different first thresholds. The first threshold is used to indicate that production of the battery packs in the current production cycle is nearly completed. The first threshold is less than a total quantity of the materials required for the process.

In these embodiments of this disclosure, the manufacturing execution system sends the material requisition request to the logistics execution system in the case of determining that the material consumption quantity of each material in the process is greater than the first threshold, thereby realizing an automatic material requisition function of the manufacturing execution system.

In some embodiments, a fourth material rack with multiple layers of material boxes is arranged at the process site; an electronic label is adhered to each layer of material box of the fourth material rack; and the delivery method further includes:
the logistics execution system sends material-related information of materials required by corresponding processes of the next production cycle to the manufacturing execution system; and
the manufacturing execution system generates, based on the material-related information of the materials required by the corresponding processes of the next production cycle, third material codes, and writes the third material codes into the electronic labels of the material boxes on the fourth material rack at the corresponding process site.

In these embodiments of this disclosure, the manufacturing execution system generates, based on the material name and material quantity of the materials required by the corresponding processes of the next production cycle, the third material code corresponding to the corresponding process, and then writes the third material code into the electronic label of the material box on the fourth material rack corresponding to the corresponding process.

In some embodiments, the delivery method further includes:
in a case that the materials required by the next production cycle are delivered to the production device for the corresponding process, the materials required by the corresponding processes of the next production cycle are placed in the material boxes on the fourth material rack.

When it is necessary to produce products for the next production cycle in the production line, the products produced in the next production cycle may be the same as or different from products produced in the current production cycle, and the materials required by the corresponding processes of the next production cycle are placed on the fourth material rack, thereby realizing quick changeover of the products on the production line.

In these embodiments of this disclosure, the delivery system further includes a controller. The controller may be a programmable logic controller (Programmable Logic Controller, PLC).

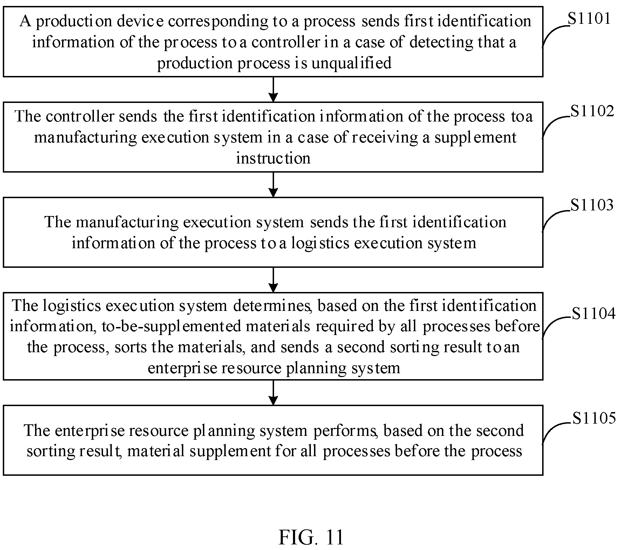

In these embodiments of this disclosure, after the delivering, by the target automated guided vehicle in response to a delivery instruction and based on the process position of the at least one material, the at least one material to the production device for the corresponding process, a delivery method for materials on a production line shown in FIG. 11 may further include the following steps.

S1101. A production device corresponding to a process sends first identification information of the process to the controller in a case of detecting that a production process is unqualified.

It should be noted that the case in which the production device corresponding to the process detects that the production process is unqualified indicates that products produced by the production device may need to be scrapped. Therefore, in these embodiments of this disclosure, the first identification information used to identify the process is sent to the controller. Once it is confirmed that the products produced by the production device are scrapped, the controller sends the first identification information to the manufacturing execution system, and the manufacturing execution system implements an automatic material supplement function.

In some embodiments, the delivery method further includes: the production device for the process outputs third information in a case of detecting an unqualified material, where the third information is used to indicate that the production process is unqualified.

In other words, when the production device for the process detects an unqualified material, it is determined that the production process of the production device for the process is unqualified.

S1102. The controller sends the first identification information of the process to the manufacturing execution system in a case of receiving a supplement instruction.

It should be noted that whether the products produced by the production device corresponding to the process needs to be scrapped need to be determined by an operator. If the operator determines that the products need to be scrapped, the operator triggers a supplement button at the production device so that the controller receives a supplement instruction. The supplement button may be disposed on the production device or disposed next to the production device. The position of the supplement button is not limited.

S1103. The manufacturing execution system sends the first identification information of the process to the logistics execution system.

S1104. The logistics execution system determines, based on the first identification information, to-be-supplemented materials required by all processes before the process, sorts the materials, and sends a second sorting result to the enterprise resource planning system.

It should be noted that when the products produced by the production device for the current process are unqualified, the to-be-supplemented materials include the materials required by all processes before the current process.

The second sorting result includes material-related information required by all processes before the current process, where the material-related information includes a delivery start time point, a material picking position, and a process position of the material.

The logistics execution system sends the second sorting result to the enterprise resource planning system, and the enterprise resource planning system is configured to allocate a corresponding automated guided vehicle for material delivery. For specific steps, reference can be made to the foregoing embodiments. Details are not described herein again.

S1105. The enterprise resource planning system performs, based on the second sorting result, material supplement for all processes before the process.

In the case of detecting that the production process is unqualified, the production device corresponding to the process sends the first identification information of the process to the controller; in a case of receiving the supplement instruction, the controller sends the first identification information of the process to the logistics execution system through the manufacturing execution system; the logistics execution system determines the to-be-supplemented materials and sorts the materials based on the first identification information of the process; and then the enterprise resource planning system allocates a corresponding automated guided vehicle for material delivery, thereby realizing an automatic material supplement function.

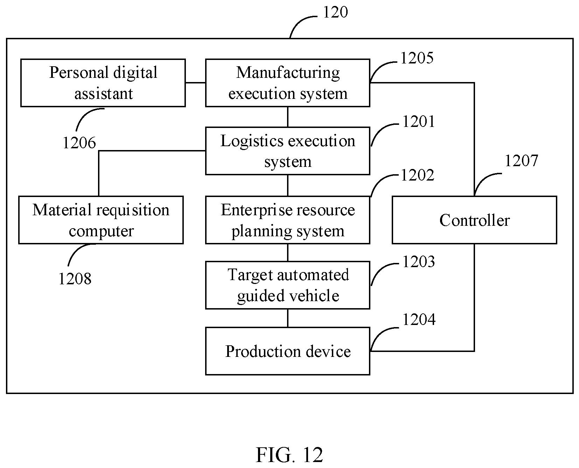

To implement the method of the embodiments of this disclosure, based on the same inventive concept, an embodiment of this disclosure further provides a delivery system for materials on a production line. FIG. 12 is a schematic diagram of a constituent structure of the delivery system for materials on a production line according to this embodiment of this disclosure. As shown in FIG. 12, the delivery system 120 includes: a logistics execution system 1201, an enterprise resource planning system 1202, a target automated guided vehicle 1203, a production device 1204 corresponding to a process, and a material requisition computer 1208. The logistics execution system 1201 is connected to the enterprise resource planning system 1202, and the material requisition computer 1208 is connected to the logistics execution system 1201.

The material requisition computer 1208 is configured to send a first material requisition request to the logistics execution system 1201 in a first material requisition case.

The logistics execution system 1201 is configured to sort, in response to the first material requisition request, materials of battery packs based on a production quantity of the battery packs in a current production cycle, determine a first sorting result, and send the first sorting result to the enterprise resource planning system 1202, where the first sorting result includes material-related information required by different processes in the production line.

The enterprise resource planning system 1202 is configured to control, based on the material-related information required by the different processes in the production line, the target automated guided vehicle 1203 to deliver a corresponding material to a production device for a corresponding process.

In this embodiment of this disclosure, the logistics execution system sorts the materials of the battery packs based on the production quantity of the battery packs in the current production cycle and sends the first sorting result to the enterprise resource planning system; and the enterprise resource planning system controls, based on the material-related information required by the different processes in the production line in the first sorting result, the target automated guided vehicle to deliver the corresponding material to the production device for the corresponding process, thereby realizing automatic delivery of the material.

In some embodiments, the material-related information includes a delivery start time point, a material picking position, and a process position of the material.

The enterprise resource planning system 1202 is further configured to send, at a first delivery start time point, a material picking position of at least one material and a process position of the at least one material to the target automated guided vehicle 1203.

The target automated guided vehicle 1203 is configured to move to a corresponding material picking region to pick a material based on the material picking position of the at least one material.

The target automated guided vehicle 1203 is further configured to deliver, in response to a delivery instruction and based on the process position of the at least one material, the at least one material to the production device for the corresponding process.

According to the foregoing technical means, the enterprise resource planning system sends, at the first delivery start time point, the material picking position of at least one material and the process position of the at least one material to the target automated guided vehicle; and the target automated guided vehicle moves to the corresponding material picking region to pick a material based on the material picking position of the at least one material, and delivers the at least one material to the production device for the corresponding process based on the process position of the at least one material, thereby realizing automatic delivery of the material.

In some embodiments, material positions of different materials are different, and process positions of different materials are the same or different.

According to the foregoing technical means, the material picking positions of different materials are different. To be specific, each material is picked at a specified position, allowing for a safer operating environment. Potential dangers, such as picking of wrong materials or unauthorized materials, can be identified and avoided more quickly by an operator.

In some embodiments, the material-related information further includes a volume of the material.

The enterprise resource planning system 1202 is further configured to determine, based on the volume of the at least one material, the target automated guided vehicle 1203 from at least one automated guided vehicle of a corresponding type.

According to the foregoing technical means, the enterprise resource planning system determines, based on the volume of the at least one material, a volume range of the at least one material, and then determines automated guided vehicles of corresponding types according to different volume ranges, to realize the most efficient delivery to a destination.

In some embodiments, the enterprise resource planning system 1202 is further configured to determine the target automated guided vehicle 1203 from at least one first automated guided vehicle in a case of determining that the volume of the at least one material falls within a first volume range and the at least one material does not include a battery cell.

The enterprise resource planning system 1202 is further configured to determine the target automated guided vehicle 1203 from at least one second automated guided vehicle in a case of determining that the volume of the at least one material falls within the first volume range and the at least one material includes the battery cell.

A first material rack with multiple layers of material boxes is arranged on the first automated guided vehicle.

According to the foregoing technical means, the volume of the at least one material falls within the first volume range, and a volume of the battery cell falls within the first volume range. Since the battery cell is delivered using a dedicated second automated guided vehicle, the target automated guided vehicle is determined from the at least one first automated guided vehicle in the case that the at least one material does not include the battery cell, and the target automated guided vehicle is determined from the at least one second automated guided vehicle in the case that the at least one material includes the battery cell, thereby ensuring efficient delivery of the material.

In some embodiments, a material falling within the first volume range includes at least one of the following: a fastener, a label, glue, a battery cell, a connecting member, a compact cooling system, a water cooling pipe, a lower box body, a copper busbar, an insulating member, an isolating member, and a roll material.

In some embodiments, the target automated guided vehicle 1203 is further configured to move to a corresponding material picking region based on the material picking position of the at least one material.

In a case that the at least one material does not include the battery cell, the at least one material is placed on the first material rack with multiple layers of material boxes on the target automated guided vehicle 1203, to implement material picking.

In a case that the at least one material includes the battery cell, the target automated guided vehicle 1203 is configured to place the battery cell, to implement material picking.

According to the foregoing technical means, in the case that the at least one material does not include the battery cell, the at least one material is placed on the first material rack with multiple layers of material boxes on the target automated guided vehicle. To be specific, at least one material is delivered at a time, improving the delivery efficiency. In the case that the at least one material includes the battery cell, the battery cell is placed on the target automated guided vehicle, ensuring safe transportation of the battery cell.

In some embodiments, the enterprise resource planning system 1202 is further configured to determine the target automated guided vehicle 1203 from at least one first automated guided vehicle in a case of determining that the volume of the at least one material falls within a second volume range.

A maximum value of the first volume range is less than a minimum value of the second volume range, a single-layer second material rack is arranged on the first automated guided vehicle, and the first volume range and the second volume range are both allowable volume ranges for the material.

According to the foregoing technical means, the enterprise resource planning system determines the target automated guided vehicle from the at least one first automated guided vehicle in the case of determining that the volume of the at least one material falls within the second volume range, thereby ensuring safe and efficient delivery of the material.

In some embodiments, a material falling within the second volume range includes at least one of the following: an auxiliary control unit and a module.

In some embodiments, the target automated guided vehicle 1203 is further configured to move to a corresponding material picking region based on the material picking position of the at least one material, and the at least one material is stacked on the single-layer second material rack on the target automated guided vehicle 1203 according to an arrangement sequence of at least one process position, to implement material picking.

According to the foregoing technical means, a material required by at least one process position can be delivered at a time, improving the delivery efficiency.

In some embodiments, a third material rack with multiple layers of material boxes is arranged at a process site; an electronic label adhered to each layer of material box of the third material rack includes a first material code; the delivery system 120 further includes a manufacturing execution system 1205 and a personal digital assistant 1206; the personal digital assistant 1206 is connected to the manufacturing execution system 1205; and the manufacturing execution system 1205 is connected to the logistics execution system 1201.

The personal digital assistant 1206 is configured to scan a first material code of an electronic label on a target material box to obtain a first scanning result and send the first scanning result to the manufacturing execution system 1205, where the target material box is any one of the multiple layers of material boxes on the third material rack.

The personal digital assistant 1206 is further configured to scan a second material code attached to a target material to obtain a second scanning result and send the second scanning result to the manufacturing execution system 1205, where the target material is any one of the at least one material.

The manufacturing execution system 1205 is further configured to write first information into the electronic label on the target material box after verifying that the first scanning result is consistent with the second scanning result, where the first information is used to indicate that the target material is placed in the target material box.

The electronic label on the target material box is used to display the first information.

According to the foregoing technical means, the manufacturing execution system accurately places the target material in the target material box after verifying that the first scanning result is inconsistent with the second scanning result, thereby realizing error proofing.

In some embodiments, the manufacturing execution system 1205 is further configured to write the first information into an alarming apparatus after verifying that the first scanning result is consistent with the second scanning result.

The alarming apparatus is configured to output the first information.

According to the foregoing technical means, the alarming apparatus outputs the first information to notify the operator that the target material can be placed in the target material box, enhancing interaction between the operator and the system.

In some embodiments, the manufacturing execution system 1205 is further configured to write second information into the electronic label on the target material box after verifying that the first scanning result is inconsistent with the second scanning result, where the second information is used to indicate that the target material is not placed in the target material box.

The electronic label on the target material box is used to display the second information.

According to the foregoing technical means, the manufacturing execution system cannot place the target material in the target material box after verifying that the first scanning result is inconsistent with the second scanning result, thereby realizing error proofing.

In some embodiments, the manufacturing execution system 1205 is further configured to write the second information into the alarming apparatus after verifying that the first scanning result is inconsistent with the second scanning result.

The alarming apparatus is configured to output the second information.

According to the foregoing technical means, the alarming apparatus outputs the second information to notify the operator that the target material cannot be placed in the target material box, enhancing interaction between the operator and the system.

In some embodiments, the logistics execution system 1201 is further configured to send material-related information required by different processes in the production line to the manufacturing execution system 1205.

The manufacturing execution system 1205 is further configured to generate, based on the material-related information required by the different processes in the production line, first material codes corresponding to the different processes.

The manufacturing execution system 1205 is further configured to write the first material codes corresponding to the different processes into electronic labels of the material boxes on the third material rack corresponding to the different processes.

According to the foregoing technical means, the manufacturing execution system writes the first material codes corresponding to the different processes into the electronic labels of the material boxes on the third material rack corresponding to the different processes, ensuring that the operator subsequently verifies the materials based on the electronic labels, thereby realizing error proofing.

In some embodiments, the target automated guided vehicle 1203 is further configured to return to an automated guided vehicle temporary storage region in response to a return instruction.

According to the foregoing technical means, the target automated guided vehicle returns to the automated guided vehicle temporary storage region in response to the return instruction. This can significantly improve the logistics operation efficiency and shorten the manual intervention and wait time.

In some embodiments, the production device 1204 corresponding to a process is configured to send a production completion instruction to the manufacturing execution system 1205 in a case of detecting the production completion instruction.

The manufacturing execution system 1205 is further configured to count, in response to the production completion instruction, a material consumption quantity of each material in the process.

The manufacturing execution system 1205 is further configured to send a material requisition request to the logistics execution system 1201 in a case of determining that the material consumption quantity of each material in the process is greater than a first threshold, where the material requisition request is used to request delivery of materials required by a next production cycle.

According to the foregoing technical means, the manufacturing execution system sends the material requisition request to the logistics execution system in the case of determining that the material consumption quantity of each material in the process is greater than the first threshold, thereby realizing an automatic material requisition function.

In some embodiments, a fourth material rack with multiple layers of material boxes is arranged at the process site; and an electronic label is adhered to each layer of material box of the fourth material rack.

The logistics execution system 1201 is further configured to send material-related information of materials required by corresponding processes of the next production cycle to the manufacturing execution system 1205.

The manufacturing execution system 1205 is further configured to generate, based on the material-related information of the materials required by the corresponding processes of the next production cycle, third material codes, and writes the third material codes into the electronic labels of the material boxes on the fourth material rack at the corresponding process site.

According to the foregoing technical means, the manufacturing execution system writes the third material code into the electronic label of the material box on the fourth material rack at the corresponding process site, ensuring that the operator subsequently verifies the materials based on the electronic labels, thereby realizing error proofing.

In some embodiments, in a case that the materials required by the next production cycle are delivered to the production device for the corresponding process, the material boxes on the fourth material rack are configured to place the materials required by the corresponding processes of the next production cycle.

According to the foregoing technical means, when it is necessary to produce products for the next production cycle in the production line, the products produced in the next production cycle may be the same as or different from products produced in the current production cycle, and the materials required by the corresponding processes of the next production cycle are placed on the fourth material rack, thereby realizing quick changeover of the products on the production line.

In some embodiments, the delivery system further includes a controller 1207. The production device 1204 corresponding to the process is connected to the manufacturing execution system 1205 through the controller 1207.

The production device 1204 corresponding to the process is further configured to send first identification information of the process to the controller 1207 in a case of detecting that a production process is unqualified.

The controller 1207 is configured to send the first identification information of the process to the manufacturing execution system 1205 in a case of receiving a supplement instruction.

The manufacturing execution system 1205 is further configured to send the first identification information of the process to the logistics execution system 1201.

The logistics execution system 1201 is further configured to determine, based on the first identification information, to-be-supplemented materials required by all processes before the process, sort the materials, and send a second sorting result to the enterprise resource planning system 1202.

The enterprise resource planning system 1202 is further configured to perform, based on the second sorting result, material supplement for all processes before the process.

According to the foregoing technical means, in the case of detecting that the production process is unqualified, the production device corresponding to the process sends the first identification information of the process to the controller; in a case of receiving the supplement instruction, the controller sends the first identification information of the process to the logistics execution system through the manufacturing execution system; the logistics execution system determines the to-be-supplemented materials and sorts the materials based on the first identification information of the process; and then the enterprise resource planning system allocates a corresponding automated guided vehicle for material delivery, thereby realizing an automatic material supplement function.

In some embodiments, the production device 1204 for the process is further configured to output third information in a case of detecting an unqualified material, where the third information is used to indicate that the production process is unqualified.

It should be understood that the "one embodiment" or "an embodiment" mentioned throughout the specification means that particular features, structures, or characteristics related to the embodiment are included in at least one embodiment of this disclosure. Therefore, the appearances of "in one embodiment" or "in an embodiment" in various places throughout the specification do not necessarily refer to the same embodiment. In addition, these particular features, structures, or characteristics may be combined in any suitable manner in one or more embodiments. It should be understood that in all the embodiments of this disclosure, the serial numbers of the steps/processes described above do not imply the order of execution. The order of execution of the steps/processes should be determined based on their functions and internal logic, and should not impose any limitation on the implementation process of the embodiments of this disclosure. The serial numbers of the embodiments of this disclosure described above are merely for description and do not represent the merits of the embodiments.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element.

In the several embodiments provided by this disclosure, it should be understood that the disclosed systems, devices, and methods can be implemented in other ways. For example, the described device embodiments are merely illustrative. For example, the unit division is merely logical function division and other division manners may be used in actual implementation. For example, multiple units or components may be combined or integrated into another system, or some features may be ignored or not be performed. In addition, the displayed or discussed mutual couplings, direct couplings or communication connections of the constituents may be indirect couplings or communication connections through some interfaces, devices, or units, and may be in electrical, mechanical, or other forms.

The foregoing units described as separate components may or may not be physically separated. The components shown as units may or may not be physical units; they may be located in one place or distributed on multiple network units; and some or all of the units can be selected according to actual needs to achieve the objectives of the embodiments. In addition, the functional units in each embodiment of this disclosure can be integrated into one processing unit, or each unit can individually serve as a separate unit, or two or more units can be integrated into one unit. The integrated unit can be implemented in the form of hardware, or in the form of hardware plus software functional units.

The above descriptions are merely embodiments of this disclosure, but the protection scope of this disclosure is not limited thereto. Any variation or replacement that can be easily conceived by persons skilled in the art within the technical scope disclosed by this disclosure should fall within the protection scope of this disclosure.

### Industrial applicability

The embodiments of this disclosure provide a delivery method and system for materials on a production line, where the logistics execution system sorts the materials of the battery packs based on the production quantity of the battery packs in the current production cycle and sends the first sorting result to the enterprise resource planning system; and the enterprise resource planning system controls, based on the material-related information required by the different processes in the production line in the first sorting result, the target automated guided vehicle to deliver the corresponding material to the production device for the corresponding process, thereby realizing automatic delivery of the material.

## Claims

1. A delivery method for materials on a production line, applied to a delivery system for materials on a production line, wherein the delivery system comprises a logistics execution system, an enterprise resource planning system, a target automated guided vehicle, a production device corresponding to a process, and a material requisition computer; and the delivery method comprises:
sending, by the material requisition computer, a first material requisition request to the logistics execution system in a first material requisition case;
sorting, by the logistics execution system in response to the first material requisition request, materials of battery packs based on a production quantity of the battery packs in a current production cycle, determining a first sorting result, and sending the first sorting result to the enterprise resource planning system, wherein the first sorting result comprises material-related information required by different processes in the production line; and
controlling, by the enterprise resource planning system based on the material-related information required by the different processes in the production line, the target automated guided vehicle to deliver a corresponding material to a production device for a corresponding process.

2. The delivery method according to claim 1, wherein the material-related information comprises a delivery start time point, a material picking position, and a process position of the material; and
the controlling, by the enterprise resource planning system based on the material-related information required by the different processes in the production line, the target automated guided vehicle to deliver a corresponding material to a production device for a corresponding process comprises:
sending, by the enterprise resource planning system at a first delivery start time point, a material picking position of at least one material and a process position of the at least one material to the target automated guided vehicle;
moving the target automated guided vehicle to a corresponding material picking region based on the material picking position of the at least one material to pick a material; and
delivering, by the target automated guided vehicle in response to a delivery instruction and based on the process position of the at least one material, the at least one material to the production device for the corresponding process.

3. The delivery method according to claim 2, wherein
material picking positions of different materials are different, and process positions of different materials are the same or different.

4. The delivery method according to claim 2 or 3, wherein the material-related information further comprises a volume of the material; and before the sending, by the enterprise resource planning system at a first delivery start time point, a material picking position of at least one material and a process position of the at least one material to the target automated guided vehicle, the delivery method further comprises:
determining, by the enterprise resource planning system based on the volume of the at least one material, the target automated guided vehicle from at least one automated guided vehicle of a corresponding type.

5. The delivery method according to claim 4, wherein the determining, by the enterprise resource planning system based on the volume of the at least one material, the target automated guided vehicle from at least one automated guided vehicle of a corresponding type comprises:
determining, by the enterprise resource planning system, the target automated guided vehicle from at least one first automated guided vehicle in a case of determining that the volume of the at least one material falls within a first volume range and the at least one material does not comprise a battery cell; and
determining, by the enterprise resource planning system, the target automated guided vehicle from at least one second automated guided vehicle in a case of determining that the volume of the at least one material falls within the first volume range and the at least one material comprises the battery cell; wherein
a first material rack with multiple layers of material boxes is arranged on the first automated guided vehicle.

6. The delivery method according to claim 5, wherein
a material falling within the first volume range comprises at least one of the following: a fastener, a label, glue, a battery cell, a connecting member, a compact cooling system, a water cooling pipe, a lower box body, a copper busbar, an insulating member, an isolating member, and a roll material.

7. The delivery method according to claim 5, wherein the moving the target automated guided vehicle to a corresponding material picking region based on the material picking position of the at least one material to pick a material comprises:
moving the target automated guided vehicle to a corresponding material picking region based on the material picking position of the at least one material; and
in a case that the at least one material does not comprise the battery cell, placing the at least one material on the first material rack with multiple layers of material boxes on the target automated guided vehicle, to implement material picking; and
in a case that the at least one material comprises the battery cell, placing the battery cell on the target automated guided vehicle, to implement material picking.

8. The delivery method according to claim 4, wherein the determining, by the enterprise resource planning system based on the volume of the at least one material, the target automated guided vehicle from at least one automated guided vehicle of a corresponding type comprises:
determining, by the enterprise resource planning system, the target automated guided vehicle from at least one first automated guided vehicle in a case of determining that the volume of the at least one material falls within a second volume range, wherein
a maximum value of the first volume range is less than a minimum value of the second volume range, a single-layer second material rack is arranged on the first automated guided vehicle, and the first volume range and the second volume range are both allowable volume ranges for the material.

9. The delivery method according to claim 8, wherein
a material falling within the second volume range comprises at least one of the following: an auxiliary control unit and a module.

10. The delivery method according to claim 8, wherein the moving the target automated guided vehicle to a corresponding material picking region based on the material picking position of the at least one material to pick a material comprises:
moving the target automated guided vehicle to a corresponding material picking region based on the material picking position of the at least one material, and stacking the at least one material on the single-layer second material rack on the target automated guided vehicle according to an arrangement sequence of at least one process position, to implement material picking.

11. The delivery method according to any one of claims 2, 3, and 5 to 10, wherein a third material rack with multiple layers of material boxes is arranged at a process site; an electronic label adhered to each layer of material box of the third material rack comprises a first material code; the delivery system further comprises a manufacturing execution system and a personal digital assistant; and
after the delivering, by the target automated guided vehicle in response to a delivery instruction and based on the process position of the at least one material, the at least one material to the production device for the corresponding process, the delivery method further comprises:
scanning, by the personal digital assistant, a first material code of an electronic label on a target material box to obtain a first scanning result and sending the first scanning result to the manufacturing execution system, wherein the target material box is any one of the multiple layers of material boxes on the third material rack;
scanning, by the personal digital assistant, a second material code attached to a target material to obtain a second scanning result and sending the second scanning result to the manufacturing execution system, wherein the target material is any one of the at least one material;
after verifying that the first scanning result is consistent with the second scanning result, writing, by the manufacturing execution system, first information into the electronic label on the target material box, wherein the first information is used to indicate that the target material is placed in the target material box; and
displaying the first information through the electronic label on the target material box.

12. The delivery method according to claim 11, wherein the delivery method further comprises:
after verifying that the first scanning result is consistent with the second scanning result, writing, by the manufacturing execution system, the first information into an alarming apparatus; and
outputting the first information through the alarming apparatus.

13. The delivery method according to claim 11, wherein the delivery method further comprises:
after verifying that the first scanning result is inconsistent with the second scanning result, writing, by the manufacturing execution system, second information into the electronic label on the target material box, wherein the second information is used to indicate that the target material is not placed in the target material box; and
displaying the second information through the electronic label on the target material box.

14. The delivery method according to claim 13, wherein the delivery method further comprises:
after verifying that the first scanning result is inconsistent with the second scanning result, writing, by the manufacturing execution system, the second information into an alarming apparatus; and
outputting the second information through the alarming apparatus.

15. The delivery method according to claim 11, wherein the delivery method further comprises:
sending, by the logistics execution system, material-related information required by different processes in the production line to the manufacturing execution system;
generating, by the manufacturing execution system based on the material-related information required by the different processes in the production line, first material codes corresponding to the different processes; and
writing, by the manufacturing execution system, the first material codes corresponding to the different processes into electronic labels of the material boxes on the third material rack corresponding to the different processes.

16. The delivery method according to any one of claims 2, 3, 5 to 10, and 12 to 15, wherein after the delivering, by the target automated guided vehicle in response to a delivery instruction and based on the process position of the at least one material, the at least one material to the production device for the corresponding process, the delivery method further comprises:
returning the target automated guided vehicle to an automated guided vehicle temporary storage region in response to a return instruction.

17. The delivery method according to any one of claims 2, 3, 5 to 10, and 12 to 15, wherein after the delivering, by the target automated guided vehicle in response to a delivery instruction and based on the process position of the at least one material, the at least one material to the production device for the corresponding process, the delivery method further comprises:
sending, by the production device corresponding to the process, a production completion instruction to the manufacturing execution system in a case of detecting the production completion instruction;
counting, by the manufacturing execution system in response to the production completion instruction, a material consumption quantity of each material in the process; and
sending, by the manufacturing execution system, a second material requisition request to the logistics execution system in a case of determining that the material consumption quantity of each material in the process is greater than a first threshold, wherein the second material requisition request is used to request delivery of materials required by a next production cycle.

18. The delivery method according to claim 17, wherein a fourth material rack with multiple layers of material boxes is arranged at the process site; an electronic label is adhered to each layer of material box of the fourth material rack; and the delivery method further comprises:
sending, by the logistics execution system, material-related information of materials required by corresponding processes of the next production cycle to the manufacturing execution system; and
generating, by the manufacturing execution system based on the material-related information of the materials required by the corresponding processes of the next production cycle, third material codes, and writing the third material codes into the electronic labels of the material boxes on the fourth material rack at a corresponding process site.

19. The delivery method according to claim 18, wherein the delivery method further comprises:
in a case that the materials required by the next production cycle are delivered to the production device for the corresponding process, placing the materials required by the corresponding processes of the next production cycle in the material boxes on the fourth material rack.

20. The delivery method according to any one of claims 2, 3, 5 to 10, and 12 to 15, wherein the delivery system further comprises a controller; and
after the delivering, by the target automated guided vehicle in response to a delivery instruction and based on the process position of the at least one material, the at least one material to the production device for the corresponding process, the delivery method further comprises:
sending, by the production device corresponding to the process, first identification information of the process to the controller in a case of detecting that a production process is unqualified;
sending, by the controller, the first identification information of the process to the manufacturing execution system in a case of receiving a supplement instruction;
sending, by the manufacturing execution system, the first identification information of the process to the logistics execution system;
determining, by the logistics execution system based on the first identification information, to-be-supplemented materials required by all processes before the process, sorting the materials, and sending a second sorting result to the enterprise resource planning system; and
performing, by the enterprise resource planning system based on the second sorting result, material supplement for all processes before the process.

21. The delivery method according to claim 20, wherein the delivery method further comprises:
outputting, by the production device for the process, third information in a case of detecting an unqualified material, wherein the third information is used to indicate that the production process is unqualified.

22. A delivery system for materials on a production line, wherein the delivery system comprises a logistics execution system, an enterprise resource planning system, a target automated guided vehicle, a production device corresponding to a process, and a material requisition computer; the logistics execution system is connected to the enterprise resource planning system; and the material requisition computer is connected to the logistics execution system;
the material requisition computer is configured to send a first material requisition request to the logistics execution system in a first material requisition case;
the logistics execution system is configured to sort, in response to the first material requisition request, materials of battery packs based on a production quantity of the battery packs in a current production cycle, determine a first sorting result, and send the first sorting result to the enterprise resource planning system, wherein the first sorting result comprises material-related information required by different processes in a production line; and
the enterprise resource planning system is configured to control, based on the material-related information required by the different processes in the production line, the target automated guided vehicle to deliver a corresponding material to a production device for a corresponding process.

23. The delivery system according to claim 22, wherein the material-related information comprises a delivery start time point, a material picking position, and a process position of the material; and
the enterprise resource planning system is further configured to send a material picking position of at least one material and a process position of the at least one material to the target automated guided vehicle at a first delivery start time point;
the target automated guided vehicle is configured to move to a corresponding material picking region to a pick material based on the material picking position of the at least one material; and
the target automated guided vehicle is further configured to deliver, in response to a delivery instruction and based on the process position of the at least one material, the at least one material to the production device for the corresponding process.

24. The delivery system according to claim 23, wherein
material positions of different materials are different, and process positions of different materials are the same or different.

25. The delivery system according to claim 23 or 24, wherein the material-related information further comprises a volume of the material; and
the enterprise resource planning system is further configured to determine, based on the volume of the at least one material, the target automated guided vehicle from at least one automated guided vehicle of a corresponding type.

26. The delivery system according to claim 25, wherein
the enterprise resource planning system is further configured to determine the target automated guided vehicle from at least one first automated guided vehicle in a case of determining that the volume of the at least one material falls within a first volume range and the at least one material does not comprise a battery cell; and
the enterprise resource planning system is further configured to determine the target automated guided vehicle from at least one second automated guided vehicle in a case of determining that the volume of the at least one material falls within the first volume range and the at least one material comprises the battery cell; wherein
a first material rack with multiple layers of material boxes is arranged on the first automated guided vehicle.

27. The delivery system according to claim 26, wherein
a material falling within the first volume range comprises at least one of the following: a fastener, a label, glue, a battery cell, a connecting member, a compact cooling system, a water cooling pipe, a lower box body, a copper busbar, an insulating member, an isolating member, and a roll material.

28. The delivery system according to claim 26, wherein
the target automated guided vehicle is further configured to move to a corresponding material picking region based on the material picking position of the at least one material;
in a case that the at least one material does not comprise the battery cell, the first material rack with multiple layers of material boxes on the target automated guided vehicle is configured to place the at least one material, to implement material picking; and
in a case that the at least one material comprises the battery cell, the target automated guided vehicle is configured to place the battery cell, to implement material picking.

29. The delivery system according to claim 25, wherein
the enterprise resource planning system is further configured to determine the target automated guided vehicle from at least one first automated guided vehicle in a case of determining that the volume of the at least one material falls within a second volume range, wherein
a maximum value of the first volume range is less than a minimum value of the second volume range, a single-layer second material rack is arranged on the first automated guided vehicle, and the first volume range and the second volume range are both allowable volume ranges for the material.

30. The delivery system according to claim 29, wherein
a material falling within the second volume range comprises at least one of the following: an auxiliary control unit and a module.

31. The delivery system according to claim 29, wherein
the target automated guided vehicle is further configured to move to a corresponding material picking region based on the material picking position of the at least one material, and the at least one material is stacked on the single-layer second material rack on the target automated guided vehicle according to an arrangement sequence of at least one process position, to implement material picking.

32. The delivery system according to any one of claims 23, 24, and 26 to 31, wherein a third material rack with multiple layers of material boxes is arranged at a process site; an electronic label adhered to each layer of material box of the third material rack comprises a first material code; the delivery system further comprises a manufacturing execution system and a personal digital assistant; the personal digital assistant is connected to the manufacturing execution system; and the manufacturing execution system is connected to the logistics execution system;
the personal digital assistant is configured to scan a first material code of an electronic label on a target material box to obtain a first scanning result and send the first scanning result to the manufacturing execution system, wherein the target material box is any one of the multiple layers of material boxes on the third material rack;
the personal digital assistant is further configured to scan a second material code attached to a target material to obtain a second scanning result and send the second scanning result to the manufacturing execution system, wherein the target material is any one of the at least one material;
the manufacturing execution system is further configured to write first information into the electronic label on the target material box after verifying that the first scanning result is consistent with the second scanning result, wherein the first information is used to indicate that the target material is placed in the target material box; and
the electronic label on the target material box is used to display the first information.

33. The delivery system according to claim 32, wherein
the manufacturing execution system is further configured to write the first information into an alarming apparatus after verifying that the first scanning result is consistent with the second scanning result; and
the alarming apparatus is configured to output the first information.

34. The delivery system according to claim 32, wherein
the manufacturing execution system is further configured to write second information into the electronic label on the target material box after verifying that the first scanning result is inconsistent with the second scanning result, wherein the second information is used to indicate that the target material is not placed in the target material box; and
the electronic label on the target material box is used to display the second information.

35. The delivery system according to claim 34, wherein
the manufacturing execution system is further configured to write the second information into an alarming apparatus after verifying that the first scanning result is inconsistent with the second scanning result; and
the alarming apparatus is configured to output the second information.

36. The delivery system according to claim 32, wherein
the logistics execution system is further configured to send material-related information required by different processes in the production line to the manufacturing execution system;
the manufacturing execution system is further configured to generate, based on the material-related information required by the different processes in the production line, first material codes corresponding to the different processes; and
the manufacturing execution system is further configured to write the first material codes corresponding to the different processes into electronic labels of the material boxes on the third material rack corresponding to the different processes.

37. The delivery system according to any one of claims 23, 24, 26 to 31, and 33 to 36, wherein the target automated guided vehicle is further configured to return to an automated guided vehicle temporary storage region in response to a return instruction.

38. The delivery system according to any one of claims 23, 24, 26 to 31, and 33 to 36, wherein
the production device for the corresponding process is configured to send a production completion instruction to the manufacturing execution system in a case of detecting the production completion instruction;
the manufacturing execution system is further configured to count, in response to the production completion instruction, a material consumption quantity of each material in the process; and
the manufacturing execution system is further configured to send a second material requisition request to the logistics execution system in a case of determining that the material consumption quantity of each material in the process is greater than a first threshold, wherein the second material requisition request is used to request delivery of materials required by a next production cycle.

39. The delivery system according to claim 38, wherein a fourth material rack with multiple layers of material boxes is arranged at the process site, and an electronic label is adhered to each layer of material box of the fourth material rack;
the logistics execution system is further configured to send material-related information of materials required by corresponding processes of the next production cycle to the manufacturing execution system; and
the manufacturing execution system is further configured to generate, based on the material-related information of the materials required by the corresponding processes of the next production cycle, third material codes, and write the third material codes into the electronic labels of the material boxes on the fourth material rack at a corresponding process site.

40. The delivery system according to claim 39, wherein
in a case that the materials required by the next production cycle are delivered to the production device for the corresponding process, the material boxes on the fourth material rack are configured to place the materials required by the corresponding processes of the next production cycle.

41. The delivery system according to any one of claims 23, 24, 26 to 31, and 33 to 36, wherein the delivery system further comprises a controller, and the production device for the corresponding process is connected to the manufacturing execution system through the controller;
the production device corresponding to the process is further configured to send first identification information of the process to the controller in a case of detecting that a production process is unqualified;
the controller is configured to send the first identification information of the process to the manufacturing execution system in a case of receiving a supplement instruction;
the manufacturing execution system is further configured to send the first identification information of the process to the logistics execution system;
the logistics execution system is further configured to determine, based on the first identification information, to-be-supplemented materials required by all processes before the process, sort the materials, and send a second sorting result to the enterprise resource planning system; and
the enterprise resource planning system is further configured to perform, based on the second sorting result, material supplement for all processes before the process.

42. The delivery system according to claim 41, wherein
the production device for the process is further configured to output third information in a case of detecting an unqualified material, wherein the third information is used to indicate that the production process is unqualified.
